Europäisches Patentamt

European Patent Office

Office européen des brevets

(11) Publication number: **0 280 518 B1**

# EUROPEAN PATENT SPECIFICATION

(45) Date of publication of patent specification: **30.12.92**  (51) Int. Cl.⁵: **B30B 11/22**, B30B 11/20, F04C 2/344, A23P 1/12

(21) Application number: **88301551.3**

(22) Date of filing: **23.02.88**

(54) **An apparatus for quantitatively extruding food material.**

(30) Priority: **23.02.87 JP 39963/87**
          **12.06.87 JP 146685/87**

(43) Date of publication of application:
     **31.08.88 Bulletin 88/35**

(45) Publication of the grant of the patent:
     **30.12.92 Bulletin 92/53**

(84) Designated Contracting States:
     **AT BE CH DE ES FR GB IT LI NL SE**

(56) References cited:
     **CH-A- 322 416          DD-A- 84 132**
     **FR-A- 1 067 648          FR-A- 2 205 119**
     **US-A- 2 280 272          US-A- 3 526 470**
     **US-A- 3 773 448**

(73) Proprietor: **RHEON AUTOMATIC MACHINERY CO. LTD.**
     **2-3, Nozawa-machi**
     **Utsunomiya-shi Tochigi-ken(JP)**

(72) Inventor: **Hayashi, Torahiko**
     **3-4, Nozawa-machi**
     **Utsunomiya-shi Tochigi-ken(JP)**
     Inventor: **Tashiro, Yasunori**
     **611-110, Yokoyama-cho**
     **Utsunomiya-shi Tochigi-ken(JP)**
     Inventor: **Hirabayashi, Koichi**
     **942-16, Mobara-cho**
     **Utsunomiya-shi Tochigi-ken(JP)**

(74) Representative: **Boyes, Kenneth Aubrey et al**
     **Frank B. Dehn & Co. Imperial House 15-19 Kingsway**
     **London WC2B 6UZ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to an apparatus for quantitatively extruding food material, typically a plastic food material, and more particularly to an apparatus for supplying a continuous body of food material uniform in quantity and density throughout all portions of the body, while removing air trapped during the process.

In prior art, various types of apparatuses for supplying plastic material have been described.

U.S. Patent No. 2,485,595 discloses an apparatus for quantitatively disposing plastic material in which a rotating screw in a cylindrical chamber feeds the material. However, this apparatus does not have a feature to remove air that is in the material before the material is discharged. When an operator supplies plastic material into a hopper air tends to be trapped in the material, and so material which has air in it, and thus which does not have a uniform density, is introduced into the apparatus. Thus, the apparatus does not supply uniform quantities of material.

U.S. Patent No. 3,526,470 discloses a pump for circulating a viscous liquid product that has a feature to remove gas from the product. However, this apparatus is not designed to quantitatively supply plastic material.

There has been no apparatus invented that can quantitatively supply plastic material by feeding it through a narrow and lengthy passage while removing air trapped in the material.

One object of this invention is to provide an apparatus for quantitatively extruding food material while removing air trapped in the material.

Another object of it is to provide an apparatus for extruding food material at a uniform flow rate without any pulsation.

From FR-A-2 205 119 there is known an apparatus for quantitatively extruding food material comprising a drum 9 rotatably mounted around a housing 12, 13 fed from a hopper 18 for food material and having an exit port 17 positioned away from said hopper 18, said drum 9 and housing 12, 13 defining therebetween a space 21 extending between said hopper 18 and the exit port 17, which over a section progressively narrows in the direction of rotation of the drum 9. The apparatus further comprises a plurality of blades 19 slidably mounted on said drum 9 to contact said housing 12, 13 and to define, with said housing 12, 13 and drum 9, compartments between adjacent blades 19. Within the compartments, food material introduced as said blades 19 rotate past said hopper 18, is moved from said hopper 18 to said exit port 17 and is progressively compressed over said section as said space 21 narrows. The apparatus also comprises means 26, 27 for releasing compressed air from said compartment before said food material is discharged through said exit port 17.

According to the present invention an apparatus for quantitatively extruding food material is provided, comprising

a) a hopper for the food material, characterised by

b) an eccentrically formed tubular housing mounted to the bottom of said hopper, having a tubular side wall which is open at the top part that faces the hopper, and two end walls, and which housing has an exit port positioned away from said hopper,

c) a rotating hollow cylindrical drum disposed in said housing, operatively connected to an axle, said axle in turn being connected to a motor, said drum having a plurality of slits formed radially through the peripheral body thereof and extending in the axial direction of said peripheral body, said side wall of said housing being so formed that the periphery of said drum and the inner surface of said side wall of said housing downstream of said hopper define a space comprising a section progressively narrowing in its cross-section toward said exit port in the direction of rotation of said drum, and slidably engage each other downstream of said exit port in the direction of rotation of said drum

d) a plurality of blades, inserted into respective ones of said slits, and of cross-sectional dimensions defined such that they slidably fit in said slits, each blade being provided with a recess on its trailing surface extruding in the radial direction over a distance slightly greater than the thickness of the peripheral body of said drum.

e) an eccentric cam mounted on side axle of said drum, the periphery thereof being radially spaced apart from the inner surface of said side wall of said housing by a distance equal to the radial width of said blades, said cam engaging said peripheral body of said drum at the top part of said drum and being progressively separated from said peripheral body in the direction of rotation of the drum, defining an inner chamber together with the end walls of the housing, and enlarging in its cross-section toward said exit port, and

f) an exit path connecting said inner chamber to said hopper,

wherein each said blade is slidably movable, by rotation of said drum, along said periphery of said eccentric cam and said inner surface of said side wall of said housing so that when the rotation brings said blade to face the bottom of said hopper, the outer portion of said blade is arranged to protrude into said hopper to introduce said food material into said space, while said recess on said blade provides a path from said space to said inner chamber for releasing into said inner chamber any air trapped in a compartment formed between said blade, the adjacent following blade, the drum and the housing, said blade being arranged to retract to a point where its outer end becomes flush-with the periphery of said drum when said blade has moved past said exit port.

One of the important features of this invention is that the apparatus is structured so that air is removed from the food material before the apparatus extrudes the material. The apparatus of this invention uses a housing, and a rotating drum inside the housing, positioned below the hopper for the food material. The material is fed between the inner wall of the housing and the drum to an exit positioned away from the hopper, and it is urged by blades located on the surface of the drum and which abut the inner surface of the housing. When the food meterial is fed, air trapped in it tends to gather at the downstream end of the material being conveyed. Thus every compartment formed by any two adjacent blades, the outer surface of the drum, and the inner surface of the housing, tends to contain air at its downstream end. In the described embodiment each blade slidably engages a complementary slit formed on the peripheral body of the drum and is fixed between the inner wall of the housing and the outer wall of a cam positioned inside the peripheral body of the drum, as will be explained below in further detail. A recess is provided on the trailing surface of each blade in such a way that the air trapped in the downstream end of the space is released into the inner chamber via a path formed between the inner wall of the slit and the recess on the blade. The air is then discharged from the inner chamber to the hopper via an exit path. Thus the food material, without air entrainment and having a uniform density, is extruded from the exit port.

In this invention air is effectively removed from food material because of the following reasons: Since the capacity of the compartment defined by an adjacent pair of blades and the periphery of the drum and the inner wall of the housing is arranged to gradually decrease as it moves downstream along with the rotation of the drum, the pressure in the compartment gradually increases. In contrast, in the inside of the peripheral body of the drum a compartment is gradually formed as the cam surface and the inner wall of the peripheral body of the drum separate from each other, such compartment being defined by them and a blade or an adjacent pair of blades. The capacity of the compartment in the inner chamber increases when the blades move downstream along with the rotation of the drum, and thus the pressure in the compartment decreases. Because the pressure in the compartment outside of the drum becomes much higher than that of the inner chamber, the air trapped in the outer compartment is drawn from it into the inner chamber. This pressure difference also forces a fractional amount of the meterial into the inner chamber, while only the meterial fills the space in the outer compartment. Thus, when the material is discharged from the exit port, it is extruded in a uniform quantity and density throughout the continuum of the material.

Embodiments of this invention will now be described by way of example only, with reference to the drawings, of which:-

Fig. 1 shows an apparatus of a first embodiment of this invention.

Fig. 2 shows the cross-sectional view of the apparatus cut along the line A-A' in Fig. 1.

Fig. 3 shows an enlarged view of the drum.

Fig. 4 shows an apparatus of a second embodiment of this invention.

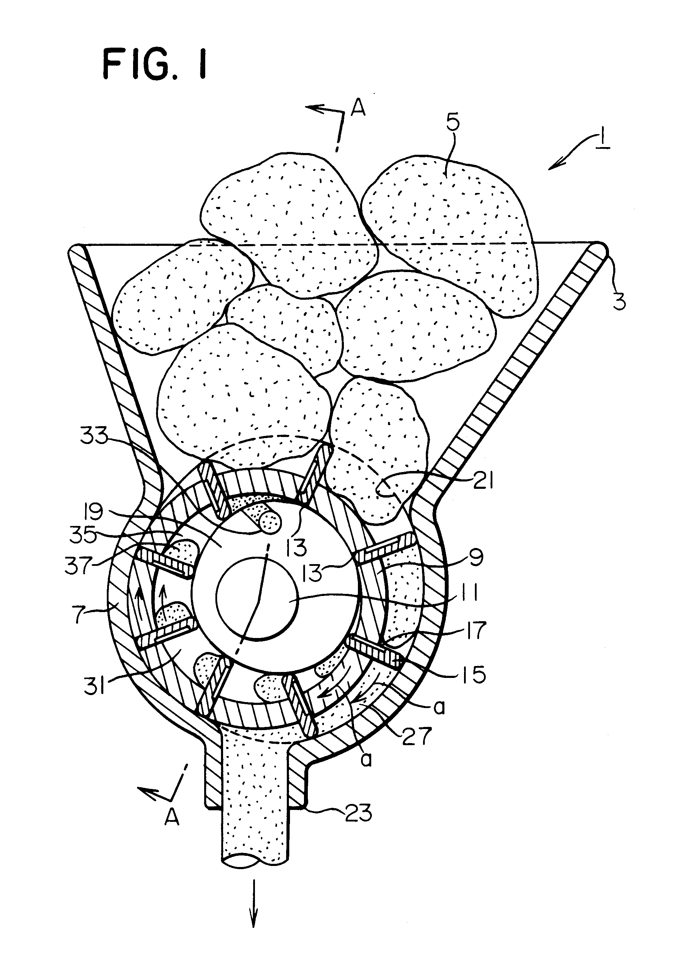

Referring to Fig. 1, the apparatus (1) includes a hopper (3) for the food material (5) and an eccentrically formed tubular housing (7) integrally mounted to the bottom of the hopper (3). The walls of the housing (7) are integrally connected to the walls of the hopper (3). The housing (7) has in it a rotating hollow cylindrical drum (9). The drum (9) is operatively connected to an axle (11), which is a drive shaft connected to a motor (not shown).

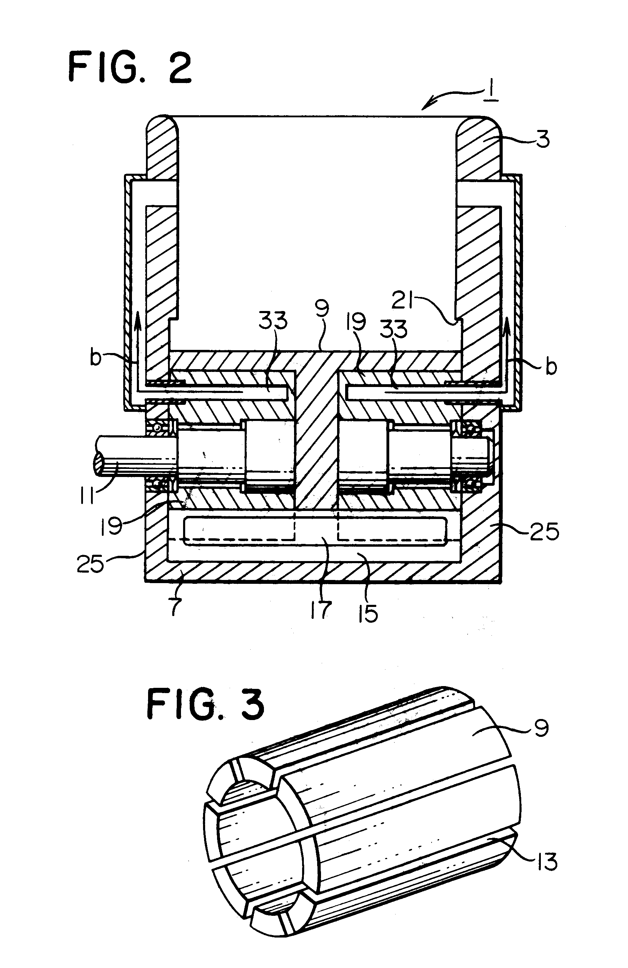

As shown in Fig. 3, the drum (9) has a plurality of slits (13) formed radially through its peripheral body at a regular separation. The slits (13) also extend in the axial direction of the periphery body.

Referring again to Figs. 1 and 2, in each of the slits (13) a blade (15) is inserted. Its dimensions are such that it snugly fits, and is slidable, in the slit.

On the trailing surface of each blade (15), in the direction of rotation of the drum (9), a recess (17) is formed and extends in the radial direction over a distance slightly greater than the thickness of the peripheral body. The recess (17) may axially extend over almost the entire length of the blade (15).

An eccentric cam (19) is fixedly mounted to the end walls (25) of the housing (7) and is positioned in the hollow interior part of the drum (9) in sliding engagement with the axle (11). The periphery of the cam (19) is radially spaced apart from the inner wall of the housing (7) by a distance equal to the radial width of the blades (15). On both end walls of the housing (7) in the area where it faces the hopper (3) steps (21) are formed to hold the blades (15) in place. The steps (21) are spaced apart from the periphery of the cam (19) by a distance that is equal to the blade's radial width. Therefore when the drum (9) is rotated the blades (15) move in the same direction as the drum (9) while the outward ends of the blades (15) engage the inner wall of the housing (7), and the tracks (21) and the inward ends of the blades (15) engage the periphery of the cam (19).

As shown in Fig. 1 the side walls of the housing are connected with the side walls of the hopper (3). The housing (7) also has two end walls (25, Fig. 2) to enclose the drum (9) and the cam (19). The side wall of the housing (7) has an eccentric shaped cross-section so that its inner surface and the periphery of the drum (9) downstream of the portion of the drum (9) facing the hopper (3) in the direction of rotation of the drum (9) shown by an arrow a in Fig. 1 define a space (27) progressively narrowing in its cross-section toward the exit port (23). However, the inner surface of the side wall of the housing (7) contacts the periphery of the drum (9) in the area downstream of the exit port (23) in the direction of rotation of the drum (9) as shown in Fig. 1.

An inner chamber (31) is formed between the periphery of the cam (19) and the inner wall of the peripheral body of the drum (9), except for the area where the cam (19) contacts the drum (9). The cam (19) is designed to have an eccentric shape. The surface of the cam is equidistant from the inner surface of the side wall of the housing. The positional relationship of the cam (19) and the drum (9) is such that the inner chamber progressively enlarges in its cross-section from the position near the hopper (3) toward the exit port (23) in the direction of rotation of the drum, and, after an area of uniform dimensions, narrows towards the downstream end, where the periphery of the cam (19) engages the inner wall of the peripheral body of the drum (9) at the top portion of the housing (7) facing the hopper (3).

Near the point where the inner chamber (31) disappears an exit path (33) is formed. The exit path connects the inner chamber (31) and the hopper (3) through the cam (19) as shown in Figs. 1 and 2.

In this apparatus a compartment is formed between an adjacent pair of blades (15) in the inner chamber (31) and the space (27). Since the drum (9) and the cam (19) are enclosed in the housing (7), the compartments are sealed by the end walls (25) and the side wall of the housing (7) and the periphery of the cam (19), as shown in Fig. 2.

In operation the drum (9) rotates clockwise as shown by an arrow a in Fig. 1. At the top part of the housing (7) the outward end of the blade (15) protrudes into the hopper (3). When the protruding blade rotates along with the rotating of the drum (9) it pushes the food material into the space (27) between the inner surface of the side wall of the housing (7) and the drum (9). The outward end of the blade (15) engages the inner surface of the side wall of the housing (7) to define a sealed compartment, together with an adjacent blade (15), the drum (9), and the end walls (25). The material introduced into the space (27) is confined in the compartment and moves in the rotational direction a, as shown in Fig. 1.

As the drum (9) rotates the volume of the compartment formed by an adjacent pair of blades, the drum, and the side wall and end walls of the housing (7), progressively decreases. In contrast, the periphery of the cam (19) and the inner wall of the peripheral body of the drum (9) separate from each other to form the inner chamber (31), which progressively enlarges. An adjacent pair of blades (15) also forms a compartment in the inner chamber with the cam, the drum, and the end walls of the housing (7), and the volume of the compartment progressively enlarges as the drum (9) rotates up to the area near the downstream end of the exit port (23).

When the material is introduced from the hopper (3) into the space (27), air tends to be trapped in the material and enters the first formed compartment. As shown in Fig. 1, the air tends to gather at the downstream part of the compartment.

Since the recess (17) of the blade (15) extends over a distance greater than the thickness of the drum (9), at some point during the rotation of the drum (9) the blade (15) becomes positioned so that the recess (17) stretches beyond both surfaces of the drum (9). At this point the space (27) communicates with the inner chamber (31) via a path formed by the recess (17) between a wall of the slit (13) and the blade (15), as shown in Fig. 1. The space in the compartment formed outside of the drum (9) becomes smaller as the drum (9) rotates, and thus the pressure within the compartment increases, while the space of the inner chamber (31) increases and thus the pressure within the compartment inside of the drum (9) decreases. Thus, the pressure of the space (27) becomes much greater than that of the inner chamber (31). Due to the pressure difference, air (35), together with a fractional portion of the material (37), is forced from the space (27) into the inner chamber (31). Thus, as the drum (9) ratates air in the outer compartment is removed from the space (27), and the space (27) is only filled with the material (5) before the compartment arrives at an area adjacent the exit port (23), as shown in Fig. 2.

When the blade (15) arrives at an area near the exit port (23), it moves to a point where the recess (17) does not extend beyond the two surfaces of the drum (9) so that it closes the path for the air. Therefore, the air (35) that is trapped in the inner chamber (31) does not flow back into the material (5) in the exit port (23). As a result, material that is uniform in quantity and density, and that has no remenant of air, is extruded via the exit port (23).

When the blade (15) moves past the exit port (23), the blade (15) retracts to a point where its outward end becomes flush with the periphery of the drum (9), and the periphery of the drum (9) contacts the inner wall of the housing (7). As shown in Fig. 1, the capacity of the inner chamber (31) between any adjacent pair of blades (15) is uniform until the leading blade forming a compartment approaches the point where the blade begins to be exposed to the bottom of the hopper (3). From that point on the inner chamber (31) progressively decreases its space until the periphery of the cam (19) contacts the inner wall of the drum (9) and thus the inner chamber (31) disappears at the top part of the housing (7).

As the drum (9) rotates the fractional portion of the material (37) in the inner chamber (31) moves toward the top part of the housing (7), being pushed by the leading surface of the blade (15). Adjacent the top part of the housing (7), where the inner chamber (31) disappears, the exit path (33) is formed through the cam (19) to remove the meterial (37) and the air (35) trapped in the inner chamber (31) by the propelling force of the blade (15). The material (37) and the air (35) returns to the hopper (3) via the exit path (33) as shown by arrows b in Fig. 2.

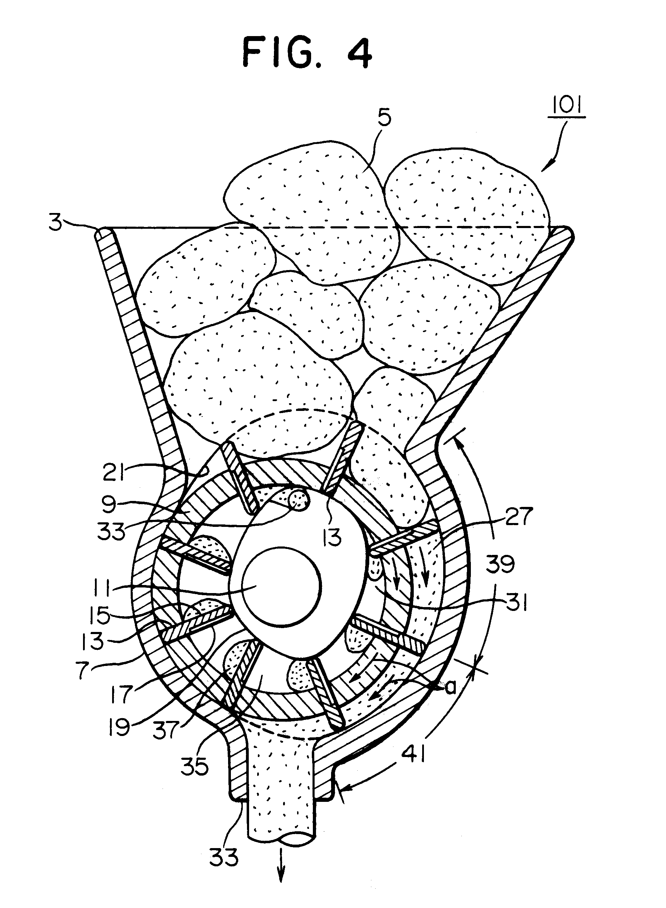

Fig. 4 shows an apparatus (101) of the second embodiment of this invention. The construction of the apparatus (101) is the same as that of the apparatus (1) of the first embodiment except for a section (41) that has uniform dimensions downstream of the decreasing dimension section (39) and adjacent and upstream of the exit port (23) in the rotational direction a. In this section with uniform dimensions (41) the dimensions of the space (27) and those of the inner chamber (31) are uniform. Thus the pressure in the space (27) and the inner chamber (31) defined by an adjacent pair of blades (15) is kept uniform. Where, as in the first embodiment, the space (27) is so formed that its dimensions gradually decrease, the pressure at the upstream portion of the material in any outer compartment is lower than that at the downstream portion. Thus the pressure at extrude the material via the exit port (23) is not uniform, and thus when the material is extruded from the exit port (23) it pulsates at a cycle synchronized with the arrival of the blades (15) at the exit port (23). Therefore the flow rate of the material extruded is not uniform if viewed microscopically. Such a feature can be a drawback for some applications.

In contrast, in the second embodiment the material (5) in the section of uniform dimensions (41) is subjected to uniform pressure throughout the space between an adjacent pair of blades (15) until it is carried to the portion adjacent the exit port (23). Thus it is uniformly extruded from the exit port (23). This section of uniform dimensions (41) should extend at least a distance equal to that between an adjacent pair of blades (15). Moreover, the position of the blade (15) relative to the drum (9) may shift in this section (41) to such a point that the recess (17) on the trailing surface of the blade (15) is concealed behind the periphery of the drum (9) to close the path connecting the space (27) and the inner chamber (31) so that the air (35) in the inner chamber is prevented from flowing back into the space (27).

The apparatus of this invention can quantitatively extrude food material. Since air in the material is completely removed before the material is extruded, it is continuously extruded, and is uniform in quantity and density.

Further, by adding a section of uniform dimensions upstream of and adjacent the exit port in the direction of rotation of the drum, an apparatus for extruding material at a uniform flow rate, even when microscopically viewed, can be provided. The extracted air is removed from the inner chamber and the fractional food material in the inner chamber is recycled to the hopper.

## Claims

1. An apparatus for quantitatively extruding food material comprising

    a) a hopper (3) for food material (5), characterised by

    b) an eccentrically formed tubular housing (7) mounted to the bottom of said hopper, having a tubular side wall, which is open at the top part that faces the hopper, and two end walls, and which housing has an exit port (23) positioned away from said hopper,

    c) a rotating hollow cylindrical drum (9) disposed in said housing, operatively connected to an axle (11), said axle in turn being connected to a motor, said drum having a plurality of slits (13) formed radially through the peripheral body thereof and extending in the axial direction of said peripheral body, said side wall of said housing (7) being so formed that the periphery of said drum and the inner surface of said side wall of said housing downstream of said hopper define a space comprising a section (27) progressively narrowing in its cross-section toward said exit port, in the direction of rotation of said drum, and slidably engage each other downstream of said exit port in the direction of rotation of said drum,

    d) a plurality of blades (15), inserted into each of said slits (13) and of cross-sectional dimensions defined such that they slidably fit in said slits, each blade being provided with a recess (17) on its trailing surface extending in the radial direction over a distance slightly greater than the thickness of the peripheral body of said drum (9),

e) an eccentric cam (19) mounted on said axle of said drum, the periphery thereof being radially spaced apart from the inner surface of said side wall of said housing by a distance equal to the radial width of said blades, said cam engaging said peripheral body of said drum at the top portion of said drum and being progressively separated from said peripheral body in the direction of rotation of the drum, defining an inner chamber (31) together with the end walls of the housing, and enlarging in its cross-section toward said exit port, and

f) an exit path (33) connecting said inner chamber to said hopper,

wherein each said blade (15) is slidably movable, as said drum (9) rotates, along said periphery of said eccentric cam (19) and said inner surface of said side wall of said housing (7), so that when the rotation brings said blade to face the bottom of said hopper the outer part of said blade is arranged to protrude into said hopper to introduce said food material into said space, while said recess (17) on said blade provides a path from said space to said inner chamber for releasing into said inner chamber the air trapped in a compartment formed between said blade, the adjacent following blade, the drum and the housing, said blade being arranged to retract to a point where its outer end becomes flush with the periphery of said drum when said blade has moved past said exit port.

2. The apparatus of claim 1, wherein said blade is adapted to move relative to said drum to close said path from said space to said inner chamber when it arrives at an area adjacent said exit port.

3. The apparatus of claim 1, wherein said space comprises a section having uniform dimensions adjacent said exit port upstream thereof in the direction of rotation of said drum.

4. The apparatus of claim 2, wherein said blade is adapted to move relative to said drum to close said path from said space to said inner chamber when it arrives at said uniform dimensional section.

5. The apparatus of claim 3 or 4 wherein said section extends over a distance that is at least the same as the distance between any adjacent pair of said blades.

6. The apparatus of any of claims 1 to 5 wherein said exit path is positioned near the top part of said inner chamber and said inner chamber is formed so that it narrows in cross-section toward said exit path.

7. The apparatus of any preceding claim wherein said path is formed through said eccentric cam.

8. The apparatus of any preceding claim further comprising a track (21) for said blades provided on the end walls of the housing in the area where it faces the hopper, said track being radial and equidistant from the surface of said eccentric cam by a distance equal to the radial width of each said blade.

**Patentansprüche**

1. Vorrichtung zum quantitativen Extrudieren eines Nahrungsmittels, die beinhaltet:

a) einen Trichter (3) für das Nahrungsmittel (5), gekennzeichnet durch:

b) ein exzentrisch geformtes, rohrförmiges Gehäuse (7), das am Boden dieses Trichters montiert ist und eine rohrförmige Seitenwand, die im oberen, am Trichter liegenden Teil offen ist, und zwei Endwände aufweist, wobei dieses Gehäuse eine von diesem Trichter abgewendete Ausgangsöffnung (23) aufweist,

c) eine rotierende, hohle, zylindrische Trommel (9), die in diesem Gehäuse angeordnet ist und die in Wirkverbindung mit einer Achse (11) steht, wobei diese Achse ihrerseits mit einem Motor verbunden ist, diese Trommel eine Vielzahl von Schlitzen (13) aufweist, die radial durch deren peripheren Körper geformt sind und sich in axialer Richtung dieses peripheren Körpers erstrecken, wobei diese Seitenwände dieses Gehäuses (7) so geformt sind, daß der Umfang dieser Trommel und die Innenfläche dieser Seitenwand dieses Gehäuses in Strömungsrichtung nach diesem Trichter einen Raum definieren, der einen Abschnitt (27) aufweist, der sich fortschreitend in seinem Querschnitt zu dieser Ausgangsöffnung zu in Rotationsrichtung dieser Trommel verengt, und die in Strömungsrichtung nach dieser Ausgangsöffnung in der Rotationsrichtung dieser Trommel miteinander gleitend in Eingriff stehen,

d) eine Vielzahl von Schaufeln (15), die jede jeweils in einen dieser Schlitze (13) eingesetzt sind und die ihren Querschnittsabmessungen nach so definiert sind, daß sie gleitend in diese Schlitze passen, und jede Schaufel mit einer Aussparung (17) an ihrer Eintrittsfläche versehen ist, die sich in radialer Richtung über eine Strecke erstreckt, die etwas größer ist als die Dicke des peripheren Körpers dieser Trommel (9),

e) eine exzentrische Nockenscheibe (19), die an dieser Achse dieser Trommel montiert ist und deren Umfang radial von der Innenfläche dieser Seitenwand dieses Gehäuses um eine Strecke beabstandet ist, die gleich ist der radialen Breite dieser Schaufeln, wobei diese Nockenscheibe im oberen Teil dieser Trommel in diesen peripheren Körper dieser Trommel eingreift und fortschreitend von diesem peripheren Körper in Drehrichtung der Trommel abhebt und zusammen mit den Endwänden des Gehäuses eine innere Kammer (31) definiert, deren Querschnitt in Richtung zur Ausgangsöffnung zunimmt, und

f) ein Ausgangspfad (33), der diese innere Kammer mit diesem Trichter verbindet, wobei jede dieser Schaufeln (15) entlang dieser Peripherie dieser exzentrischen Nockenscheibe (19) und dieser Innenfläche dieser Seitenwand dieses Gehäuses (7) gleitend bewegbar ist, wenn diese Trommel (9) rotiert, so daß, wenn die Drehung diese Schaufel dem Boden dieses Trichters gegenüber liegen läßt, der äußere Teil dieser Schaufel so steht, daß er in diesen Trichter vorsteht, um das Nahrungsmittel in diesen Raum zu transportieren, während diese Aussparung (17) in dieser Schaufel einen Pfad zwischen diesem Raum und dieser Innenkammer bildet, um die in einem Abteil zwischen dieser Schaufel, der nachfolgenden Schaufel, der Trommel und dem Gehäuse eingesperrte Luft in diese Innenkammer abzuleiten, wobei diese Schaufel so eingerichtet ist, daß sie bis zu einem Punkt zurückgeschoben wird, wo ihr äußeres Ende mit der Peripherie dieses Gehäuses bündig abschließt, sobald diese Schaufel an dieser Ausgangsöffnung vorbeibewegt wurde.

2. Die Vorrichtung gemäß Anspruch 1, bei der diese Schaufel so angepaßt ist, daß sie sich relativ zu der Trommel bewegt, um diesen Pfad von diesem Raum zu dieser Innenkammer zu sperren, sobald sie in einen Bereich in der Nähe dieser Ausgangsöffnung gelangt.

3. Die Vorrichtung gemäß Anspruch 1, in der dieser Raum einen Abschnitt mit gleichmäßigen Abmessungen an dieser Ausgangsöffnung in Drehrichtung dieser Trommel in Strömungsrichtung vor dieser Ausgangsöffnung aufweist.

4. Die Vorrichtung gemäß Anspruch 2, in der diese Schaufel so angepaßt ist, daß sie sich relativ zu dieser Trommel bewegt, um diesen Pfad von diesem Raum zu dieser Innenkammer zu schließen, wenn sie zu diesem Abschnitt mit gleichmäßigen Abmessungen kommt.

5. Die Vorrichtung gemäß Anspruch 3 oder 4, in der sich dieser Abschnitt über eine Entfernung erstreckt, die wenigstens gleich ist dem Abstand zwischen einem beliebigen benachbarten Paar dieser Schaufeln.

6. Die Vorrichtung gemäß einem beliebigen der Ansprüche 1 bis 5, in der dieser Ausgangspfad am oberen Teil dieser Innenkammer liegt und diese Innenkammer so geformt ist, daß sich ihr Querschnitt in Richtung auf diesen Ausgangspfad zu verengt.

7. Die Vorrichtung gemäß einem beliebigen der vorstehenden Ansprüche, in der dieser Ausgangspfad durch diese exzentrische Nockenscheibe geformt wird.

8. Die Vorrichtung gemäß einem beliebigen der vorstehenden Ansprüche, die ferner eine für diese Schaufeln vorgesehene Bahn (21) an den Endwänden des Gehäuses im Bereich vorsieht, wo es an dem Trichter gegenüberliegt, wobei diese Bahn radial und gleichbeabstandet von der Oberfläche dieser exzentrischen Nockenscheibe in einem Abstand angeordnet ist, der gleich ist der radialen Breite jeder dieser Schaufeln.

**Revendications**

1. Appareil pour extruder quantitativement une matière alimentaire, comportant :

a) une trémie (3) pour une matière alimentaire (5),

caractérisé par

b) une enveloppe tubulaire (7) formée de façon excentrée, montée sur le fond de ladite trémie, ayant une paroi latérale tubulaire, qui est ouverte à la partie supérieure qui fait face à la trémie, et deux parois extrêmes, laquelle enveloppe présente un orifice (23) de sortie placé à distance de ladite trémie,

c) un tambour cylindrique creux tournant (9) disposé dans ladite enveloppe, relié fonctionnellement à un arbre (11), ledit arbre étant lui-même relié à un moteur, ledit tambour présentant plusieurs fentes (13) formées radialement à travers son corps périphérique et s'étendant dans la direction axiale dudit corps périphérique, ladite paroi latérale de ladite enveloppe (7) étant formée de façon que la périphérie dudit tambour et la surface intérieure de ladite paroi latérale de ladite enveloppe en aval de ladite trémie définissent un espace comprenant une partie (27) dont la section transversale se réduit progressivement vers ledit orifice de sortie, dans le sens de la rotation dudit tambour, et portent en glissant l'une contre l'autre en aval dudit orifice de sortie dans le sens de la rotation dudit tambour,

d) plusieurs palettes (15) insérées dans chacune desdites fentes (13) et de dimensions, en section transversale, définies de manière qu'elles puissent s'ajuster en glissant dans lesdites fentes, chaque palette étant pourvue d'un évidement (17) sur sa surface arrière s'étendant dans la direction radiale sur une distance légèrement supérieure à l'épaisseur du corps périphérique dudit tambour (9),

e) une came excentrique (19) montée sur ledit arbre dudit tambour, sa périphérie étant espacée radialement de la surface intérieure de ladite paroi latérale de ladite enveloppe d'une distance égale à la largeur radiale desdites palettes, ladite came engageant ledit corps périphérique dudit tambour à la partie supérieure dudit tambour et étant séparée progressivement dudit corps périphérique dans le sens de la rotation du tambour, définissant une chambre intérieure (31) avec les parois extrêmes de l'enveloppe, et s'élargissant dans sa section transversale vers ledit orifice de sortie, et

f) un trajet (33) de sortie raccordant ladite chambre intérieure à ladite trémie,

dans lequel chaque palette (15) peut être déplacée en glissant, pendant que ledit tambour (9) tourne, le long de ladite périphérie de ladite came excentrique (19) et de ladite surface intérieure de ladite paroi latérale de ladite enveloppe (7), de manière que, lorsque la rotation amène ladite palette face au fond de ladite trémie, la partie extérieure de ladite palette soit agencée pour faire saillie dans ladite trémie afin d'introduire ladite matière alimentaire dans ledit espace, tandis que ledit évidement (17) sur ladite palette établit un trajet depuis ledit espace jusqu'à ladite chambre intérieure pour libérer dans ladite chambre intérieure l'air emprisonné dans un compartiment formé entre ladite palette, la palette adjacente suivante, le tambour et l'enveloppe, ladite palette étant agencée pour se rétracter jusqu'à un point où son extrémité extérieure arrive à fleur de la périphérie dudit tambour lorsque ladite palette s'est déplacée au-delà dudit orifice de sortie.

2. Appareil selon la revendication 1, dans lequel ladite palette est destinée à se déplacer par rapport audit tambour pour fermer ledit trajet depuis ledit espace jusqu'à ladite chambre intérieure lorsqu'elle arrive dans une zone adjacente audit orifice de sortie.

3. Appareil selon la revendication 1, dans lequel ledit espace comprend une partie ayant des dimensions uniformes à proximité immédiate dudit orifice de sortie en amont de celui-ci dans le sens de la rotation dudit tambour.

4. Appareil selon la revendication 2, dans lequel ladite palette est destinée à se déplacer par rapport audit tambour pour fermer ledit trajet allant dudit espace jusqu'à ladite chambre intérieure lorsqu'elle arrive à ladite partie de dimensions uniformes.

5. Appareil selon la revendication 3 ou 4, dans lequel ladite partie s'étend sur une distance qui est au moins égale à la distance comprise entre une paire quelconque de deux palettes adjacentes.

6. Appareil selon l'une quelconque des revendications 1 à 5, dans lequel ledit trajet de sortie est positionné à proximité de la partie supérieure de ladite chambre intérieure et ladite chambre intérieure est formée de façon que sa section transversale rétrécisse vers ledit trajet de sortie.

7. Appareil selon l'une quelconque des revendications précédentes, dans lequel ledit trajet de sortie est formé à travers ladite came excentrique.

8. Appareil selon l'une quelconque des revendications précédentes, comportant en outre un chemin (21) pour lesdites palettes, situé sur les parois extrêmes de l'enveloppe dans la zone où elle fait face à la trémie, ledit chemin étant radial et équidistant de la surface de ladite came excentrique à une distance égale à la largeur radiale de chacune desdites palet-

**EP 0 280 518 B1**

tes.

# FIG. 1

# FIG. 2

# FIG. 3

# FIG. 4